# EUROPÄISCHE PATENTSCHRIFT

(11) **EP 2 361 358 B1**
(45) Veröffentlichungstag und Bekanntmachung des Hinweises auf die Patenterteilung: **27.01.2016**
(21) Anmeldenummer: 09780395.1
(22) Anmeldetag: 09.07.2009
(51) Int. Cl.: F23G 7/06, F23L 15/04, F23G 7/07

(54) **VERFAHREN UND VORRICHTUNG ZUR THERMISCHEN NACHVERBRENNUNG VON MIT OXIDIERBAREN SUBSTANZEN BELADENER ABLUFT**
METHOD AND DEVICE FOR THERMALLY AFTERBURNING EXHAUST AIR LOADED WITH OXIDIZABLE SUBSTANCES
PROCÉDÉ ET DISPOSITIF DE POSTCOMBUSTION THERMIQUE D'AIR ÉVACUÉ, CHARGÉ DE SUBSTANCES OXYDABLES

(30) Priorität: 10.07.2008 DE 102008032357
(43) Veröffentlichungstag der Anmeldung: 31.08.2011
(73) Patentinhaber: SMS group GmbH, 40237 Düsseldorf (DE)
(72) Erfinder: LUZ, Werner, 51377 Leverkusen (DE)
(74) Vertreter: Lotze, Rüdiger
(86) Internationale Anmeldenummer: PCT/EP2009/058773
(87) Internationale Veröffentlichungsnummer: WO 2010/004010

(56) Entgegenhaltungen:
- EP-A1- 0 664 148
- EP-A1- 1 161 980
- DE-A1- 19 508 807
- DE-C1- 3 616 333
- US-A- 5 427 746
- US-A- 5 466 421

## Beschreibung

Die Erfindung betrifft ein Verfahren und eine Vorrichtung zur thermischen Nachverbrennung von mit oxidierbaren Substanzen beladener Abluft. Ein derartiges Verfahren und eine derartige Vorrichtung sind in DE19508807A beschrieben.

Derartige Verfahren und Vorrichtungen sind aus dem Stand der Technik bekannt. Sie dienen insbesondere der Nachverbrennung flüchtiger organischer Substanzen, wie sie beispielsweise bei industriellen Beschichtungs- oder Trocknungsanlagen in die Abluft gelangen. Nach den gesetzlichen Vorschriften zum Emissionsschutz dürfen derartige Substanzen nur in durch entsprechende Grenzwerte festgelegten Konzentrationen in der in die Umgebung geblasenen Abluft vorliegen, so dass eine Nachbehandlung der Abluft in der Regel zwingend durchgeführt werden muss.

Eine einfache Möglichkeit, die Konzentration derartiger Substanzen unter die Grenzwerte zu senken, liegt darin, die stets brennbaren, d.h. oxidierbaren, Substanzen in einer entsprechenden Vorrichtung nachzuverbrennen, wobei sie in unschädliche Substanzen wie Wasser, Kohlendioxid und Ähnliches umgewandelt werden.

Eine hierzu geeignete aus dem Stand der Technik bekannte Vorrichtung arbeitet regenerativ. Hierbei durchströmt der beladene Abluftstrom eine zuvor erhitzte Wärmespeichermasse und gelangt von dort aus in erwärmten Zustand in eine Oxidationskammer, wo die im Abluftstrom enthaltenen Schadstoffe nachverbrannt werden. Die hierfür erforderliche thermische Energie wird durch einen Zusatzbrenner bereitgestellt. Der durch die exotherme Oxidationsreaktionen weiter erhitzte Abluftstrom strömt als Reingasstrom über eine weitere Wärmespeichermasse, wo er einen Teil seiner Wärme deponiert, zu einem Kamin, um von dort in die Umgebung geleitet zu werden. In regelmäßigen zeitlichen Abständen von beispielsweise ca. 60 Sekunden wird durch ein Klappensystem die Strömungsrichtung des Abluftstroms derart verändert, dass die zuvor durch den Reingasstrom erhitzten Speichermassen nunmehr zur Aufheizung des beladenen Rohgasstroms dienen, bevor dieser in die Oxidationskammer eintritt. Die zuvor vom Rohgasstrom durchströmte Wärmespeichermasse wird nun durch den erhitzten Reingasstrom wieder angeheizt und steht im nächsten Zyklus als Wärmespeicher für den Rohgasstrom zur Verfügung.

Die thermische Energie der in der Oxidationskammer oxidativ gereinigten Abluft wird somit durch Speicherung in den Wärmespeichermassen dazu verwendet, die kalte eintretende und beladene Abluft bis fast auf Oxidationstemperatur vorzuwärmen.

Problematisch an diesem Verfahren ist, dass es nur diskontinuierlich durchgeführt werden kann, da in regelmäßigen Abständen ein Umschalten erforderlich ist, was zu heftigen Stößen in den Leitungen führt.

Aufgrund der Diskontinuität des Prozesses sind Abweichungen vom Soll-Abluftvolumen von ± 10% möglich, was sich bei vielen Abluftreinigungsprozessen störend auswirkt und zu Qualitätsverlusten an dem zu trocknenden Gut führt. Ausgehend hiervon liegt der Erfindung die Aufgabe zugrunde, ein Verfahren zur thermischen Reinigung eines mit oxidierbaren Substanzen beladenen Abluftstroms sowie eine hierfür geeignete Vorrichtung anzugeben, das bzw. die einen hocheffizienten Abluftreinigungsprozess unter minimalem Einsatz externer Energie ermöglicht. Ferner soll das Verfahren mit vergleichsweise geringem technischen Aufwand durchführbar sein und die Vorrichtung sich entsprechend mit vergleichsweise geringen Anlagenkosten realisieren lassen.

Die Aufgabe wird verfahrensmäßig mit einem Verfahren gemäß Anspruch 1 gelöst.

Durch den direkten rekuperativen Wärmeaustausch zwischen zumindest teilweise oxidativ gereinigtem Reingasstrom und ungereinigtem Rohgasstrom kann erreicht werden, dass die im ungereinigten Abluftstrom (Rohgasstrom) enthaltenen oxidierbaren Substanzen bereits im Zuge des Wärmeaustausches in der rekuperativen Wärmetauschereinheit auf ein Temperaturniveau gebracht werden, bei dem die Oxidation der Substanzen selbständig einsetzt, was zu einem zusätzlichen Anstieg der Temperatur im wärmeaufnehmenden Abluftstrom führt. Je nach Konzentration und Zusammensetzung der im beladenen Abluftstrom enthaltenen oxidierbaren Substanzen kann diese Temperaturerhöhung bereits genügen, um eine im Wesentlichen vollständige Reinigung des Abluftstroms zu bewirken. In jedem Fall steht der entsprechend erhitzte, zumindest teilsweise oxidativ gereinigte Abluftstrom (Reingasstrom) entsprechend zeitlich verzögert als Lieferant thermischer Energie in der rekuperativen Wärmetauschereinheit zur Verfügung, um die Aktivierungsenergie für die angestrebten Oxidationsreaktionen im beladenen Abluftstrom (Rohgasstrom) bereitzustellen.

Die rekuperative Wärmetauschereinheit kann ihrerseits als Platten- oder Röhrenwärmetauscher ausgebildet sein.

Mit dem erfindungsgemäßen Verfahren wird also in vorteilhafter Weise die freiwerdende Wärme der (exothermen) Oxidationsreaktionen zur Reinigung des beladenen Abluftstromes als Aktivierungsenergie für die oxidative Reinigung nachfolgender Abluftvolumina eingesetzt. Während der ungereinigte, beladene Abluftstrom also durch die rekuperative Wärmetauschereinheit strömt nimmt er Wärme in einem so hohen Maße auf, dass die den Abluftstrom reinigenden Oxidationsreaktionen bereits in Gang gesetzt werden, was zu einem zusätzlichen Temperaturanstieg infolge freiwerdender Reaktionswärme (der "Exotherme") führt. Dieser kann je nach - zeitlich variabler - Zusammensetzung und Konzentration der Schadstoffe im Abluftstrom ausreichen, um diesen im Wesentlichen vollständig und ohne Eintrag zusätzlicher Energie zu reinigen.

Ein weiterer Vorteil des erfindungsgemäßen Verfahrens liegt darin, dass es uneingeschränkt kontinuierlich betrieben werden kann, so dass Druckstöße durch das vollständige Umschalten des Leitungssystems, wie es bei aus dem Stand der Technik bekannten regenerativen Verfahren notwendig ist, entfallen.

Bei den oxidierbaren Substanzen handelt es sich in der Regel um Kohlenwasserstoffe, welche u.a. als Lösungsmittel in industriellen Beschichtungsprozessen zum Einsatz kommen. Typische Beispiele sind Alkohole, Ketone und Benzine.

Erfindungsgemäß wird bei zu schneller Erhitzung des wärmeaufnehmenden beladenen Abluftstroms (Rohgasstrom) der Volumenstrom des wärmeabgebenden, zumindest teilweise gereinigten, erhitzten Abluftstroms (Reingasstrom) durch die rekuperative Wärmetauschereinheit reduziert. Hierdurch kann wirksam vermieden werden, dass eine zu schnelle Erhöhung des Temperaturniveaus im wärmeaufnehmenden Abluftstrom erfolgt, was wiederum mit zu schnell aublaufenden exothermen Oxidationsreaktionen im beladenen Abluftstrom und damit zu explosionsartigen Volumenvergrößerung in diesem führen würde. Eine solche hätte zudem die Konsequenz, dass nachfolgende beladene Abluft aufgrund eines schlagartig vergrößerten Strömungswiderstandes in den Leitungen mit zu geringem Volumenstrom und damit zu hoher Schadstoffbelastung nachgeführt werden müsste, was in der Konsequenz zu einer noch intensiveren exothermen Oxidationsreaktion im Rohgasstrom führen würde.

Die Reduzierung des Volumenstroms des wärmeabgebenden Abluftstroms durch die rekuperative Wärmetauschereinheit kann beispielsweise durch wenigstens eine Drosselklappe bewirkt werden. Bevorzugt ist diese bezogen auf den wärmeabgebenden Abluftstrom an der Ausgangsseite der rekuperativen Wärmetauschereinheit angeordnet. Dies bedeutet, dass die Drosselklappe auf der "kalten" Seite der rekuperativen Wärmetauschereinheit angeordnet und somit nur vergleichsweise geringen thermischen Belastungen ausgesetzt ist.

Bei Reduzierung des Volumenstroms des wärmeabgebenden Abluftstroms durch die rekuperative Wärmetauschereinheit wird bevorzugt der überschüssige Volumenstrom durch eine erste Bypassleitung an der rekuperativen Wärmetauschereinheit vorbei geleitet. Das hohe Temperaturniveau des an der rekuperativen Wärmetauschereinheit vorbeigeleiteten Anteils des Volumenstroms kann zum Zwecke der Erzeugung von Heißluft und/oder zur Erhitzung eines Wärmeträgermediums durch eine weitere Wärmetauschereinheit geleitet werden, wo die thermische Energie weiteren Prozessen, beispielsweise zur Beheizung der Raumluft, zur Verfügung gestellt werden kann. Hierdurch wird der Anteil ungenutzt in die Umgebung abgeleiteten Wärme minimiert.

Erfindungsgemäß ist die Wärmetauschereinheit mehrstufig ausgebildet, wobei einzelne Wärmetauscherstufen über wenigstens eine zweite Bypassleitung überbrückt werden können. Die Überbrückung einzelner Wärmetauscherstufen kann im Rahmen einer Prozessregelung getroffen werden, um beispielsweise eine zu schnelle Erhitzung des wärmeaufnehmenden, beladenen Abluftstroms zu erreichen.

Die Reduzierung des Volumenstroms des zumindest teilweise gereinigten, wärmeabgebenden Abluftstroms (Reingasstrom) durch die rekuperative Wärmetauschereinheit erfolgt ebenfalls im Rahmen einer Regelung, um eine zu schnelle Aufheizung des wärmeaufnehmenden, beladenen Abluftstroms zu verhindern.

Nach einer weiteren besonders vorteilhaften Ausgestaltung der Erfindung wird der wärmeaufnehmende Abluftstrom nach Austritt aus der rekuperativen Wärmetauschereinheit in eine Brennkammer geleitet, wo er durch einen Brenner, bevorzugt einen Gasbrenner, zusätzlich erwärmt werden kann. Dies ist insbesondere dann sinnvoll, wenn der - durch den Wärmeaustausch mit dem gereinigten Abluftstrom und die freiwerdende Reaktionswärme bewirkte - Temperaturanstieg des wärmeaufnehmenden Abluftstroms in der rekuperativen Wärmetauschereinheit nicht ausreichend ist, um auch die erst bei sehr hohen Temperaturen (700 bis 850°C) oxidierbaren Substanzen vollständig nachzuverbrennen.

Bevorzugt wird die Brennerleistung in Abhängigkeit von der Temperatur des beladenen Abluftstroms in der rekuperativen Wärmetauschereinheit geregelt. Hierzu sind in der Wärmetauschereinheit bevorzugt an mehreren Stellen Temperaturfühler angeordnet, um den Temperaturverlauf des zu reinigenden Abluftstromes in der rekuperativen Wärmetauschereinheit überwachen zu können und entsprechend bei zu geringer Austrittstemperatur diese durch eine

Heraufsetzung der Brennerleistung auf das gewünschte Niveau anzuheben. Erfolgt die Erwärmung des wärmeaufnehmenden Abluftstromes in der rekuperativen Wärmetauschereinheit zu schnell, so wird die Brennerleistung auf ein Minimum reduziert und ggf. der Volumenstrom des gereinigten Abluftstromes durch die rekuperative Wärmetauschereinheit reduziert.

Nach einer weiteren vorteilhaften Ausgestaltung der Erfindung wird der zumindest teilweise gereinigte, erwärmte Abluftstrom nach Austritt aus der rekuperativen Wärmetauschereinheit durch eine Katalysatoreinheit zur weiteren Oxidation der oxidierbaren Substanzen geleitet. Hierbei wird ausgenutzt, dass die Oxidation bestimmter Substanzen in Anwesenheit eines Katalysators, beispielsweise in Form eines keramischen Schüttgutes und/oder keramischer Wabensteine, bei vergleichsweise niedriger Temperatur stark begünstigt wird.

Nach einer besonders bevorzugten Ausgestaltung der Erfindung wird der zumindest teilweise gereinigte, erwärmte Abluftstrom nach Verlassen der rekuperativen Wärmetauschereinheit zunächst in die Brennkammer geleitet und anschließend durch die Katalysatoreinheit geleitet. Hierdurch ist es möglich, bei vergleichsweise niedrigen Temperaturen oxidierende Substanzen bereits in der rekuperativen Wärmetauschereinheit nachzuverbrennen, wobei das Temperaturniveau im Abluftstrom aufgrund der Reaktionswärme weiter ansteigt. Solche Substanzen, die bei diesen Temperaturen noch nicht verbrennen, können sodann in der Brennkammer mit Unterstützung einer Brennerflamme nachverbrannt werden. Schließlich können diejenigen Substanzen, die nur bei extrem hohen Temperaturen nachverbrennen, in der Katalysatoreinheit bei vergleichsweise niedriger Temperatur nachverbrannt werden. Hierbei ergibt sich dann keine weitere nennenswerte Temperaturerhöhung.

Die eingangs genannte Aufgabe wird ferner mit einer Vorrichtung gemäß Anspruch 12 gelöst.

Für die Vorteile der erfindungsgemäßen Vorrichtung gilt das vorstehend Gesagte entsprechend. Insbesondere ist die erfindungsgemäße Vorrichtung einfach aufgebaut und ermöglicht die kontinuierliche oxidative Reinigung eines beladenen Abluftstroms.

Nach einer weiteren Ausgestaltung der Erfindung ist in Strömungsrichtung des wärmeaufnehmenden Abluftstroms (Rohgasstrom) hinter der rekuperativen Wärmetauschereinheit eine Brennkammer mit einem Brenner angeordnet, wobei der Brenner bevorzugt ein gasbetriebener Brenner ist. Hiedurch kann die Temperatur im Abluftstrom, nachdem dieser die rekuperative Wärmetauschereinheit verlassen hat, weiter erhöht werden.

Erfindungsgemäß ist eine Regeleinrichtung vorgesehen, welche derart ausgelegt ist, dass die Brennerleistung und/ober der Volumenstrom des zumindest teilweise gereinigten, erhitzten Abluftstromes (Reingasstrom) durch die Wärmetauschereinheit regelbar ist. Durch diese Regeleinrichtung wird erreicht, dass die Temperaturerhöhung des Rohgasstroms in der rekuperative Wärmetauschereinheit infolge der frei werdenden Reaktionswärme kontrolliert abläuft und es insbesondere zu keinen explosionsartigen Volumenvergrößerungen infolge einer zu starken Aufheizung bei sehr hoher Konzentration der oxidierbaren Substanzen kommt. Wird durch in der Wärmetauschereinheit angeordnete Temperaturfühler ein zu starker Anstieg der Ablufttemperatur festgestellt, so kann der Volumenstrom des zumindest teilweise gereinigten Abluftstromes (Reingasstrom) durch den Wärmetauscher schnell reduziert werden.

Ferner kann die Regeleinrichtung derart ausgelegt sein, dass an festgelegter Stelle in der Vorrichtung, beispielsweise in der Brennkammer ein vorgegebenes Temperaturintervall nicht verlassen wird. Dies kann beispielsweise durch die Regelung der Brennerleistung erfolgen. So kann bei zu geringem Temperaturanstieg im beladenen Abluftstrom in der Wärmetauschereinheit die Brennerleistung erhöht werden, um das geforderte Temperaturniveau zu erreichen. Steigt umgekehrt die Temperatur in der Wärmetauschereinheit zu stark an, so kann einerseits die Brennerleistung reduziert werden und ggf. zusätzlich der Volumenstrom des zumindest teilweise gereinigten Abluftstroms durch die Wärmetauschereinheit reduziert werden.

Bevorzugt ist die Regeleinrichtung ferner derart ausgelegt, dass zusätzlich die Überbrückung einzelner Wärmetauscherstufen durch den wärmeaufnehmenden Abluftstrom (Rohgasstrom) in Abhängigkeit von der Temperatur des wärmeaufnehmenden Abluftstroms in der Wärmetauschereinheit regelbar ist.

Ein weiterer Aspekt der Erfindung betrifft eine Anlage zur Beschichtung und/oder Trocknung von bahnförmigem Material mit einer Vorrichtung nach einem der Ansprüche 12 bis 23.

Im folgenden wird die Erfindung anhand einer Ausführungsbeispiele darstellenden Zeichnung näher erläutert. Es zeigen:
- Fig. 1: eine Vorrichtung zur thermischen Nachverbrennung eines mit oxidierbaren Substanzen beladenen Abluftstroms in einer seitlichen Schnittansicht,
- Fig. 2: die Vorrichtung aus Fig. 1 in einer Schnittansicht gemäß Schnittlinie II-II aus Fig.1 und
- Fig. 3: eine weitere Vorrichtung zur thermischen Reinigung I mit oxidierbaren Substanzen beladenen Abluftstroms im Blockschaltbild.

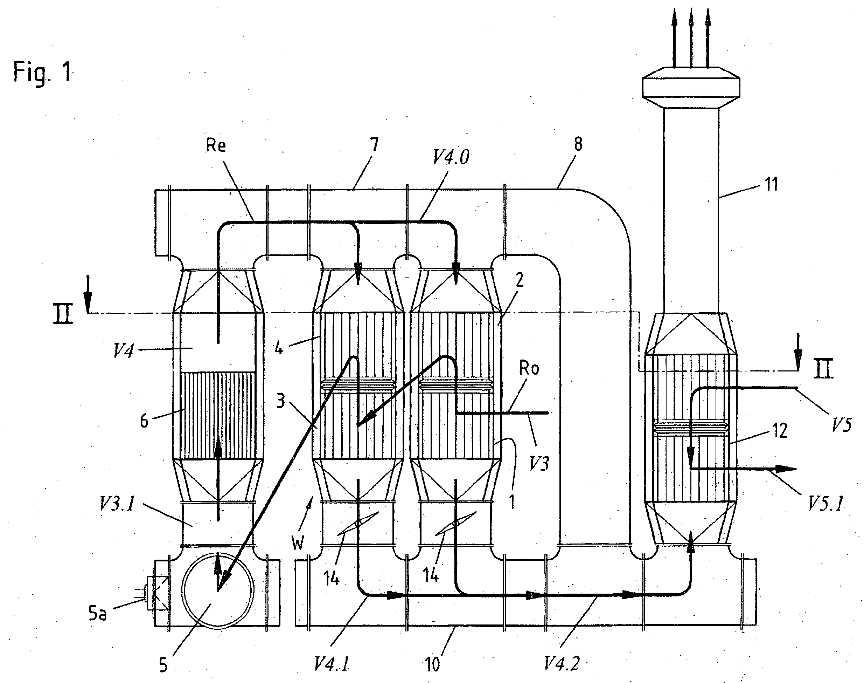

Die Vorrichtung der Fig. 1 umfasst eine zentrale rekuperative Wärmetauschereinheit W, die vorliegend in vier einzelne Wärmetauscherstufen 1, 2, 3, 4 unterteilt ist. Die vier Wärmetauscherstufen 1 - 4 sind in zwei Gehäusen aus jeweils hochtemperaturfestem Stahl paarweise übereinander angeordnet und können als Röhren- oder Plattenwärmetauscher ausgebildet sein.

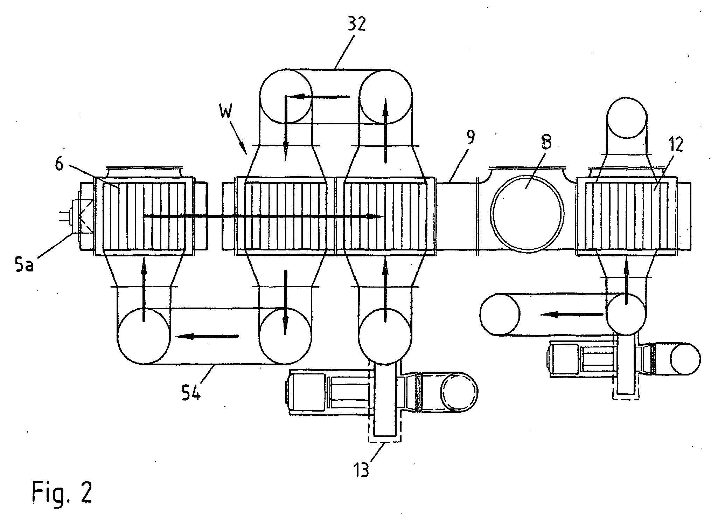

Wie insbesondere aus Fig. 2 hervorgeht sind die Wärmetauscherstufen 1 - 4 derart miteinander verbunden, dass ein in die Wärmetauscherstufe 1 eingeleiteter mit oxidierbaren Substanzen beladener Abluftstrom (Rohgasstrom) zunächst durch die Wärmetauscherstufen 1 und 2 strömt, so dann über ein externes Leitungssystem 32 von der Wärmetauscherstufe 2 in die Wärmetauscherstufe 3 strömt, von hier in die Wärmetauscherstufe 4 strömt und anschließend in die Wärmetauschereinheit W über eine Leitung 54 verlässt. Für den Rohgasstrom sind somit die vier Wärmetauscherstufen 1 - 4 seriell hintereinander geschaltet.

Die Vorrichtung der Fig. 1 umfasst ferner eine Brennkammer 5, in welcher ein als kompakter Gasbrenner 5a ausgebildeter Zündbrenner installiert ist, der auch geeignet ist, die Vorrichtung thermisch hochzufahren. Die Brennkammer 5 ist wiederum mit einer - vorliegend darüber angeordneten - Katalysatoreinheit 6 verbunden, welche ein katalytisch wirksames keramisches Schüttgut und/oder keramische Wabensteine umfassen kann. In Strömungsrichtung hinter der Katalysatoreinheit 6 ist eine obere Verteilerleitung 7 angeordnet, die ihrerseits mit den übereinander angeordneten Wärmetauscherstufen 3 und 4 sowie 1 und 2 verbunden ist. Ferner mündet die obere Verteilerleitung 7 in eine erste Bypassleitung 8, über die die Wärmetauscherstufen 1 - 4 überbrückt werden können. Sowohl die übereinander angeordneten 1 und 2 sowie 3 und 4 als auch die erste Bypassleitung 8 münden in eine untere Verteilerleitung 9, die ihrerseits mit einem Kamin 10 verbunden ist. Auf der Ausgangsseite der beiden Wärmetauscherstuferipaare 2, 1 und 4, 3 (bezogen auf den von oben nach unten strömenden wärmeabgebenden gereinigten Abluftstrom (Reingasstrom)) ist oberhalb der unteren Verteilerleitung 9 jeweils eine Drosselklappe 14 angeordnet, mittels derer sich der Volumenstrom des Reingasstromes durch die Wärmetauscherstufenpaare 2, 1 und 3, 4 regeln lässt. Vorliegend ist in dem Kamin 10 noch eine weitere Wärmetauschereinheit 11 angeordnet.

Die Funktionsweise der Vorrichtung der Fig. 1 ist die Folgende:
ein mit oxydierbaren Substanzen, beispielsweise mit Lösemitteldämpfen in Form von Kohlenwasserstoffen verschiedener Art, beladener Abluftstrom (Rohgasstrom) Ro wird der Vorrichtung über einen Ventilator 13 zugeführt und strömt, wie in Fig. 1 gezeigt in die Wärmetauscherstufe 1 der Wärmetauschereinheit W ein. Wie der Tabelle 1 zu entnehmen ist, hat dieser beladene Abluftstrom eine Temperatur von typischerweise 200 350°C (Messpunkt V3, vgl. Tabelle 1). Wie oben beschrieben strömt der beladene Abluftstrom von der Wärmetauscherstufe 1 durch die weiteren Wärmetauscherstufen 2 - 4, wie in Fig. 1 durch einen entsprechenden Pfeil dargestellt. Bei diesem seriellen Durchströmen der einzelnen Wärmetauscherstufen 1 - 4 wird der Rohgasstrom Ro durch Wärmeaustausch mit dem rückgeführten, gereinigten Reingasstrom Re stark erhitzt. Hierbei beginnen bereits Teile der in dem Rohgasstrom Ro enthaltenen Kohlenwasserstoffe zu verbrennen, wodurch sich der Rohgasstrom infolge der freiwerdenden Reaktionswärme weiter erhitzt. Über die Leitung 54 strömt sodann der derart bereits teilweise gereinigte Abluftstrom (noch immer als Rohgasstrom bezeichnet) in die Brennkammer 5, wo er ggf. durch den Brenner 5a weiter auf eine Zieltemperatur von 600 - 700°C (Messpunkt V 3.1) erhitzt wird. Die nachträgliche Erhitzung durch den Brenner kann entfallen, wenn bereits in den Wärmetauscherstufen 1 - 4 eine ausreichende Temperaturerhöhung stattgefunden hat.

Wie der Tabelle 1 wiederum zu entnehmen ist, sinkt durch die Nachverbrennung der Kohlenwasserstoffe im Rohgasstrom Ro die Beladung des Rohgasstroms Ro von ursprünglich typischerweise 8 g/Nm³ weiter ab bzw. die thermische Reinigung des Rohgasstroms, Ro setzt sich fort, so dass in der Regel bis 95 % der Kohlewasserstoffe bereits nachverbrannt und in unschädliche Substanzen umgesetzt sind. Von der Brennkammer 5 aus wird der nun weiter gereinigte Rohgasstrom Ro in die Katalysatoreinheit 6 geleitet, wo die noch vorhandenen Kohlenwasserstoffe (ca. 5 %) thermisch oxidieren, so dass die Schadstoffbeladung des Abluftstroms im Bereich des Messpunktes V4 auf 0 - 2g pro Nm³absinkt. Die in diesem Bereich herrschenden hohen Temperaturen von 750 - 850°C sorgen schließlich dafür, dass auch die Restanteile an Kohlenwasserstoff im Abluftstrom - dieser wird hier als Reingasstrom Re bezeichnet - vor dem Messpunktes V4.0 auf 0 absenken.

Der derart vollständig gereinigte Abluftstrom Re strömt mit einer Temperatur von 800 - 950°C parallel in die Wärmetauscher 1 und 2 sowie 3 und 4, wobei sich der durch die Wärmetauscherstufen 3 und 4 strömende Teilstrom im Bereich des Messpunktes V4.1 auf eine Temperatur von 750 - 650°C abkühlt. Im Bereich des Messpunktes V 4.2 beträgt die Reingastemperatur nur noch 550 - 400°C. Die wieder zusammengeführten Reingasteilströme Re gelangen sodann zu einem Abluftkamin 8, wo sie zunächst noch eine weitere Wärmetauschereinheit 12 durchströmen. Hierbei geben Sie ihre Restwärme an einen zunächst 0 - 30°C kalten Frischluftstrom ab, woraufhin dieser sich auf 300 - 450°C aufheizt. Nach Verlassen dieser Wärmetauschereinheit 12 weist der gereinigte Abluftstrom Re eine Temperatur von 350 - 120°C auf, mit welcher er in die Außenluft geblasen wird.

Die Vorrichtung der Fig. 1 ist nun mit einer Regeleinrichtung (nicht dargestellt) versehen, welche derart ausgelegt ist, dass in Abhängigkeit von der an verschiedenen Stellen der rekuperativen Wärmetauschereinheit W und in der Brennkammer 5 durch entsprechende Temperaturfühler (nicht dargestellt) aufgenommenen Temperatur die Brennerleistung und der Volumenstrom des gereinigten Abluftstromes (Reingas) durch die rekuperative Wärmetauschereinheit W geregelt werden kann. Es ist auch möglich nur die Leistungen des Brenners 5a oder aber den Volumenstrom des gereinigten Abluftstroms Re durch die Wärmetauschereinheit W zu regeln.

Die Regelung dient dabei dazu, die Temperatur des Rohgasstroms im Bereich des Brennraums 5 auf 600 - 700°C einzuregeln. Steigt beispielsweise der Anteil der Kohlenwasserstoffe im rohgasseitigem Abluftstrom Ro plötzlich an, so führt dies zu einem Temperaturanstieg in den Wärmetauscherstufen 1 - 4, da bei der Oxidierung eines Teils der Kohlenwasserstoffe in den Wärmetauscherstuven 1 - 4 ein größeres Maß an Reaktionswärme freiwird. Bei einer Erhöhung der Schadstoffbeladung von 1 g/Nm³ kann dabei in guter Näherung von einem Temperaturanstieg von ca. 25 K ausgegangen werden. Um diesen Temperaturanstieg zu begegnen, wird durch die Regeleinrichtung der Volumenstrom des heißen Reingasstroms Re von oben durch die Wärmetauscherstufen 1 - 4 mittels der Drosselklappen 14 reduziert, was dazu führt, dass ein entsprechend größerer Anteil des Reingases Re durch die erste Bypassleitung 8 zum Abluftkamin 11 geleitet wird. Nimmt der Anteil der Kohlenwasserstoffe im rohgassseitigen Abluftstrom Ro hingegen wieder ab, so können die Drosselklappen 13 wieder geöffnet werden, so dass ein entsprechend größerer Anteil des Reingasstroms Re durch die Wärmetauscherstufen 1 - 4 strömen kann, da weniger Reaktionswärme anfällt. Nimmt die Konzentration der Kohlenwasserstoffe im rohgasseitigen Abluftstrom Ro weiter ab, so dass der Temperaturanstieg in Folge der Reaktionswärme in den Wärmetauscherstufen 1 - 4 nicht mehr ausreicht, um den gewünschte Temperaturbereich von 600 - 700°C im Brennraum 5 sicherzustellen, so wird mittels des Brenners 5a der Rohgasstrom Ro in der Abluft zusätzlich erhitzt.

Somit lässt sich ein konstantes Temperaturniveau im Bereich der Brennkammer 5 einstellen. Um den Einsatz externer Energie durch den Brenner 5a zu minimieren, wird bevorzugt die Regelung derart eingestellt, dass der gewünschte Temperaturbereich von beispielsweise 600 - 700°C allein durch die in den Wärmetauscherstufen 1 - 4 einsetzende Nachverbrennung der Kohlenwasserstoffe und der damit freiwerdenden Reaktionswärme erreicht wird.

**Tabelle 1**

| Messpunkt | Bezeichnung | Temperatur | Druck | Beladung |
|---|---|---|---|---|
| | | °C | Pa | g/Nm³ |
| V 3 | Rohgas | 200 - 350 | 700 | Max. 8,5 |
| V 3.1 | Rohgas | 600 - 700 | 550 | 5 - 8,5 |
| V 4 | Reingas | 750 - 850 | 400 | 0-2 |
| V 4.0 | Reingas | 800 - 950 | 300 | 0 |
| V 4.1 | Reingas nach WT 3 und 4 | 750 - 650 | 140 | 0 |
| V 4.2 | Reingas nach WT 1 und 2 | 550 - 400 | 120 | 0 |
| V 6 | Kaminluft nach WT 12 | 350 120 | 20 | 0 |
| V 5 | Frischluft | 0 - 30 | | 0 |
| V 5.1 | Heißluft nach WT 12 | 300 - 450 | | 0 |

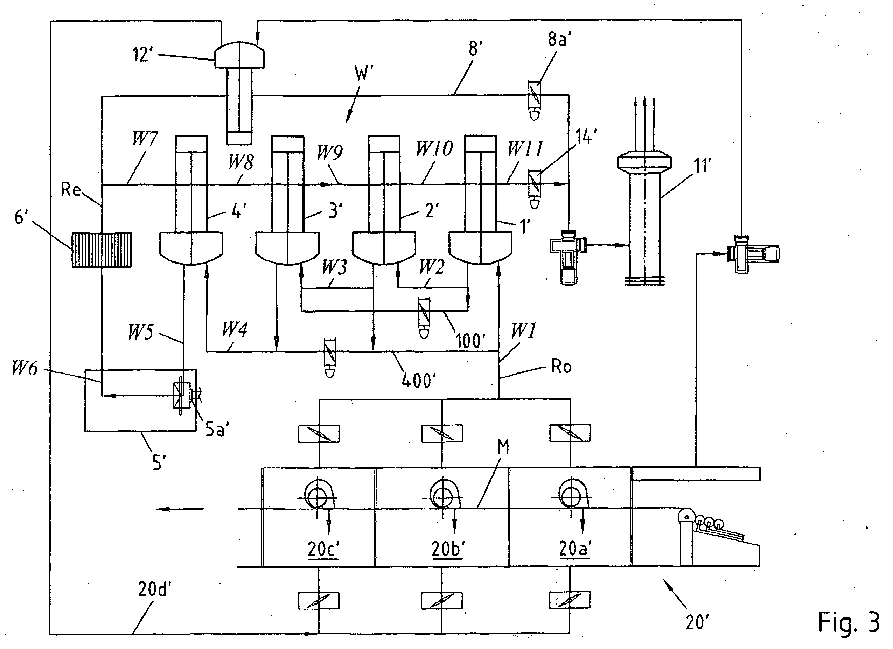

In Fig. 3 ist eine weitere Vorrichtung zur thermischen Reinigung eines mit oxidierbaren Substanzen belasteten Abluftstroms in stark schematisierter Form dargestellt.

In einer Beschichtungseinheit 20' wird ein bahnförmiges Material, beispielsweise ein Metallband M, mit einer lösemittelhaltigen Beschichtung versehen. Das derart beschichtete Band durchläuft sodann drei aufeinanderfolgende Finishöfen 20a', 20b', 20c', in welchen die niedrigsiedenden Lösemittelanteile (z.B. Alkohole und Ketone) ebenso wie die hochsiedenen Anteile in die Dampfphase übergehen und mit der Abluft aus den Finishöfen 20a' - 20c' abgesaugt werden. Die mit diesen Kohlenwasserstoffen beladene Abluft Ro (Rohgasstrom), die eine Temperatur von ca. 100°C aufweist (vgl. Tabelle 2) wird sodann in eine insgesamt vierstufige Wärmetauschereinheit W' geleitet.

In dieser durchläuft sie nacheinander vier Wärmetauscherstufen 1', 2', 3', 4', wobei sie durch Wärmeaustausch mit dem heißen gereinigten Abluftstrom Re (Reingasstrom) sukzessive erhitzt wird. Bei einem unbeladenen Abluftstrom erfolgt hierbei theoretisch eine Temperaturerhöhung von ursprünglich 100°C auf 700°C. Ist die rohgasseitige Abluft Ro, wie in Tabelle 2 notiert, mit Kohlenwasserstoffen als oxidierbaren Substanzen beladen, so setzt in den Wärmetauscherstufen 3' und 4' bereits die exotherme oxidative Reinigung des Abluftstroms Ro ein, wodurch in Folge der freiwerdenden Reaktionswärme die Temperatur des beladenen Abluftstromes Ro auf eine Ziehtemperatur von beispielsweise 845°C am Ausgang der Wärmetauscherstufe 4' erhöht wird (Messpunkt W5, vgl. Tabelle 2). Bei dieser Temperatur sind bereits 90 - 95% der Kohlenwasserstoffe verbrannt.

Über den in der Brennkammer 5' angeordneten Brenner 5a' kann nun gegebenenfalls das Temperaturniveau des beladenen Abluftstroms noch weiter erhöht werden. Nach Austritt aus der Brennkammer 5' tritt der mit nur noch einem geringen Rest (z.B. 0,5 g/Nm³) an Kohlenwasserstoffen beladene Abluftstrom Ro in eine Katalysatoreinheit 6' ein, wo die verbleibenden Kohlenwasserstoffanteile an der Oberfläche des Katalysatormaterials nachverbrennen. Hierbei ergibt sich eine nur noch sehr geringe Temperaturerhöhung auf ca. 850°C (Messpunkt W7).

Der derart vollständig gereinigte Abluftstrom Re wird nun beim seriellen Durchlaufen der Wärmetauscherstufen 4' - 1' von 850°C bis auf ca. 250°C (Messpunkt W11) abgekühlt. Der abgekühlte Reingasstrom Re wird sodann über eine weitere Ventilatoreinheit in einen Kamin 11' geleitet, von wo er in die Umgebungsluft geblasen wird.

Die Vorrichtung der Fig. 3 umfasst wiederum eine Regeleinrichtung (nicht dargestellt), mit der sowohl die Brennerleistung als auch ein Drosselklappensystem gesteuert werden kann, um auch bei wechselnder Konzentration der Kohlenwasserstoffe in der Abluft aus den Finishöfen 20a' - 20c' eine kontrollierte vollständige Nachverbrennung der Kohlenwasserstoffe bei insgesamt gleichbleibendem Temperaturniveau zu erreichen.

Steigt beispielsweise die Konzentration der Kohlenwasserstoffe in der Abluft Ro an, so erfolgt eine stärkere Erwärmung der beladenen Abluft in den Wärmetauscherstufen 1' - 4', da eine größere Menge thermischer Energie infolge einer verstärkten exothermen Reaktion frei wird, die den Abluftstrom Ro weiter anheizt. Um einer zu starken Aufheizung der beladenen Abluft Ro zu begegnet, kann nun beispielsweise ein Teilstrom der beladenen Abluft Ro an einzelnen Wärmetauscherstufen über Bypassleitungen 100', 400' vorbeigeleitet werden. Vorliegend ist es beispielsweise möglich, die Wärmetauscherstufe 2' über die Bypassleitung 100' zu überbrücken. Ferner ist es möglich, die Wärmetauscherstufen 1' bis 3' über die weitere Beipassleitung 400' zu überbrücken.

Neben einer Überbrückung einzelner Wärmetauscherstufen ist es ferner möglich, den heißen wärmeabgebenden Reingasstrom Re an den Wärmetauscherstufen 4' - 1' zumindest teilweise vorbeizuleiten, indem nämlich der Volumenstrom durch die Wärmetauscherstufen 4' - 1' über die Drosselklappe 14' reduziert wird und gleichzeitig die Drosselklappe 8a' geöffnet wird, so dass ein Teil des Reingasstromes über die erste Bypassleitung 8' geleitet wird. Hierbei kann gleichzeitig über eine weitere Wärmetauscherstufe 12' aus der Beschichtungsanlage abgeleitete Frischluft erhitzt und den Finishöfen 20a' - 20c' als Heizluft über eine Leitung 20d' zugeleitet werden. Stellt die Regeleinrichtung fest, dass die Erwärmung des beladenen Abluftstroms Ro in den vier Wärmetauscherstufen 1' - 4' ausreichend ist, so kann die Brennerleistung auf ein Minimum abgesenkt werden, wodurch keine externe Energie dem Prozess zugeführt werden muss.

Weist der beladene Abluftstrom Ro dagegen nur relativ geringe Kohlenwasserstoffkonzentrationen auf, so durchläuft der Abluftstrom Ro sämtliche Wärmetauscherstufen 1' - 4', in dem die Drosselklappen der Überbrückungsleitungen 100', 400' geschlossen werden, so dass ein maximaler Wärmeaustausch zwischen heißem Reingasstrom Re und der beladenen Abluft Ro stattfindet. Gleichzeitig ist es möglich, das gewünschte Temperaturniveau hinter der vierten Wärmetauscherstufe 4' bzw. in der Brennkammer 5' durch Erhöhung der Brennerleistung und durch Schließen der Bypassleitung 8' zu erreichen.

**Tabelle 2**

| Bezeichnung | Wärmetauscher | Temperatur | Beladung |
|---|---|---|---|
| | | °C | g/Nm³ |
| Rohgas W1 | WT 100 Rohgas | 100 | 6 |
| Rohgas W2 | WT 200 Rohgas | 250 | 6 |
| Rohgas W3 | WT300 Rohgas | 400 | 6 |
| Rohgas W4 | WT400 Rohgas | 550 | 6 |
| Rohgas W5 | vor Gasbrenner | 845 | 0,5 |
| Brennraum W6 | nach Gasbrenner | 837,5 | 0,5 |
| Reingas W7 | nach Cleaner | 850 | 0 |
| Reingas W8 | WT400 Reingas | 700 | 0 |
| Reingas W9 | WT300 Reingas | 550 | 0 |
| Reingas W10 | WT200 Reingas | 400 | 0 |
| Kaminluft W11 | WT100 Reingas | 250 | 0 |

Mit der Erfindung wird somit ein Verfahren und eine Vorrichtung zur thermischen Reinigung eines mit oxidierbaren Substanzen beladenen Abluftstroms zur Verfügung gestellt, welches bzw. welche Möglichkeit bietet, den Abluftstrom vollständig und in autarker Betriebsweise zu reinigen.

## Patentansprüche

1. Verfahren zur thermischen Reinigung eines mit oxidierbaren Substanzen beladenen Abluftstroms (Ro) mittels thermischer Nachverbrennung,
- wobei der mit oxidierbaren Substanzen beladene Abluftstrom {Rohgasstrom) (Ro) als wärmeaufnehmender Stoffstrom durch eine mehrstufige, rekuperative Wärmetauschereinheit (W, W') geleitet wird, wobei die oxidierbaren Substanzen zumindest teilweise in einer exothermen Reaktion oxidiert werden, wobei der Abluftstrom (Ro) zusätzlich erhitzt wird,
- wobei der derart zumindest teilweise oxidativ gereinigte, erhitzte Abluftstrom (Reingasstrom) (Re) als wärmeabgebender Stoffstrom erneut durch die wenigstens eine rekuperative Wärmetauschereinheit (W, W') geleitet wird und dabei Aktivierungsenergie für die exotherme Reaktion bereitstellt
- bei zu schneller Erhitzung des wärmeaufnehmenden beladenen Abluftstroms (Rohgasstrom) (Ro) der Volumenstrom des wärmeabgebenden, zumindest teilweise gereinigten, erhitzten Abluftstroms (Reingasstrom) (Re) durch die rekuperative Wärmetauschereinheit (W, W') reduziert wird.

2. Verfahren nach Anspruch 1,
**dadurch gekennzeichnet, dass** die Reduzierung des Volumenstroms des wärmeabgebenden Abluftstroms (Reingasström) (Re) durch die rekuperative Wärmetauschereinheit (W, W') durch wenigstens eine Drosselklappe (14, 14') erfolgt.

3. Verfahren nach Anspruch 2,
**dadurch gekennzeichnet, dass** die Drosselklappe (14, 14') bezogen auf den wärmeabgebenden Abluftstrom (Reingasstrom) (Re) an der Ausgangsseite der rekuperativen Wärmetauschereinheit (W, W') angeordnet ist.

4. Verfahren nach einem der Ansprüche 1 bis 3,
**dadurch gekennzeichnet, dass** bei Reduzierung des Volumenstroms des wärmeabgebenden Abluftstroms (Reingasstrom) (Re) durch die rekuperative Wärmetauschereinheit (W, W') der überschussige Volumenstrom durch eine erste Bypassleitung (8, 8') an der rekuperative Wärmetauschereinheit (W, W) vorbei geleitet wird.

5. Verfahren nach Anspruch 4,
**dadurch gekennzeichnet, dass** wenigstens eine Wärmetauscherstufe (1', 2' , 3') über wenigstens eine zweite Bypassleitung (100', 400') überbrückt wird.

6. Verfahren nach einem der Ansprüche 1 bis 5,
**dadurch gekennzeichnet, dass** der teilweise gereinigte, erwärmte Abluftstrom nach (Re) Austritt aus der rekuperativen Wärmetauschereinheit (W, W') in eine Brennkammer (5, 5') geleitet wird und dort durch einen Brenner (5a, 5a') zusätzlich erwärmt wird.

7. Verfahren nach Anspruch 6,
**dadurch gekennzeichnet, dass** die Brennerleistung in Abhängigkeit von der Temperatur des beladenen Abluftstroms (Ro) in der Wärmetauschereinheit (W, W') geregelt wird.

8. Verfahren nach einem der Ansprüche 1 bis 7,
**dadurch gekennzeichnet, dass** der teilweise gereinigte, erwärmte Abluftstrom (Ro) nach Austritt aus der rekuperativen Wärmetauschereinheit (W, W') durch eine Katalysatoreinheit (6, 6') zur weiteren Oxidation der oxidierbaren Substanzen geleitet wird.

9. Verfahren nach Anspruch 8,
**dadurch gekennzeichnet, dass** die Katalysatoreinheit (6, 6') ein keramisches Schuttgut und/oder keramische Wabensteine umfasst.

10. Verfahren nach Anspruch 6 oder 7 und einem der Ansprüche 8 oder 9,
**dadurch gekennzeichnet, dass** der zumindest teilweise gereinigte, erwärmte Abluftstrom (Ro) nach Verlassen der rekuperativen Wärmetauschereinheit (W, W') zunächst in die Brennkammer (5, 5') geleitet wird und anschließend durch die Katalysatoreinheit (6, 6') geleitet wird.

11. Verfahren nach Anspruch 4,
**dadurch gekennzeichnet, dass** der wärmeabgebende Abluftstrom (Reingasstrom) (Re) nach Verlassen der rekuperativen Wärmetauschereinheit (W, W') oder nach Durchtritt durch die erste Bypassleitung (8,8'), durch eine weitere Wärmetauschereinheit (12) zur Erzeugung von Heißluft und/oder zur Erhitzung eines Wärmetragermediums geleitet wird.

12. Vorrichtung zur thermischen Reinigung eines mit oxidierbaren Substanzen beladenen Abluftstroms (Ro) mittels thermischer Nachverbrennung, insbesondere zur Durchführung eines Verfahrens nach einem der Ansprüche 1 bis 11,
- mit einer mehrstufigen, rekuperativen Wärmetauschereinheit (W, W'), durch welche der mit oxidierbaren Substanzen beladene Abluftstrom (Rohgasstrom) (Ro) als wärmeaufnehmender Stoffstrom durchleitbar ist, wobei die oxidierbaren Substanzen zumindest teilweise in einer exothermen Reaktion oxidiert werden und wobei das Temperaturniveau des Abluftstroms (Ro) ansteigt,
- wobei der derart zumindest teilweise oxidativ gereinigte, erhitzte Abluftstrom (Reingasstrom) (Re) als wärmeabgebender Stoffstrom durch die rekuperative Wärmetauschereinheit (W, W') durchleitbar ist, so dass dabei Aktivierungsenergie für die exotherme Reaktion bereitgestellt wird
- wobei eine Regeleinrichtung vorgesehen ist, welche derart ausgelegt ist, dass der Volumenstrom des zumindest teilweise gereinigten, erhitzten Abluftstromes (Reingasstrom) (Re) durch die rekuperative Wärmetauschereinheit (W, W') in Abhängigkeit von der Temperatur des wärmeaufnehmenden beladenen Abluftstroms (Rohgasstrom) (Ro) derart regelbar ist, dass bei zu schneller Erhitzung des wärmeaufnehmenden beladenen Abluftstroms (Rohgasstrom) (Ro) der Volumenstrom des wärmeabgebenden, zumindest teilweise gereinigten, erhitzten Abluftstroms (Reingasstrom) (Re) durch die rekuperative Wärmetauschereinheit (W, W') reduziert wird.

13. Vorrichtung nach Anspruch 12,
**dadurch gekennzeichnet, dass** eine erste Bypassleitung (8,8') zur zumindest teilweisen Überbrückung der rekuperativen Wärmetauschereinheit durch den zumindest teilweise oxidativ gereinigten, erhitzten Abluftstrom (Reingasstrom) (Re) vorgesehen ist.

14. Vorrichtung nach Anspruch 13,
**dadurch gekennzeichnet, dass** wenigstens eine zweite Bypassleitung (100' , 400') mit variabel einstellbarem Durchfluss zur Überbrückung wenigstens einer Wärmetauscherstufe (1', 2', 3') vorgesehen ist.

15. Vorrichtung nach einem der Ansprüche 12 bis 14,
**dadurch gekennzeichnet, dass** in Strömungsrichtung des wärmeaufnehmenden Abluftstroms (Rohgasstrom) (Ro) hinter der rekuperativen Wärmetauschereinheit (W, W') eine Brennkammer (5, 5') mit einem Brenner (5a, 5a') angeordnet ist.

16. Vorrichtung nach Anspruch 15,
**dadurch gekennzeichnet, dass** der Brenner ein gasbetriebener Brenner (5a, 5a') ist.

17. Vorrichtung nach einem der Ansprüche 12 bis 16,
**dadurch gekennzeichnet, dass** in Strömungsrichtung des wärmeaufnehmenden beladenen Abluftstroms (Re) hinter der wenigstens einen Wärmetauschereinheit (W, W') eine Katalysatoreinheit (6, 6') zur weiteren Oxidation angeordnet ist.

18. Vorrichtung nach Anspruch 17,
**dadurch gekennzeichnet, dass** die Katalysatoreinheit (6, 6') ein keramisches Schüttgut und/oder keramische Wabensteine umfasst.

19. Vorrichtung nach Anspruch 15 oder 16 und Anspruch 17 oder 18,
**dadurch gekennzeichnet, dass** die Katalysatoreinheit (6, 6') in Strömungsrichtung des wärmeaufnehmenden beladenen Abluftstroms (Ro) hinter der Brennkammer (5, 5') angeordnet ist.

20. Vorrichtung nach einem der Ansprüche 12 bis 19,
**dadurch gekennzeichnet, dass** die Regeleinrichtung ferner derart ausgelegt ist, dass die Brennerleistung in Abhängigkeit von der Temperatur des wärmeaufnehmenden beladenen Abluftstroms (Rohgasstrom) (Ro) regelbar ist.

21. Vorrichtung nach Anspruch 20,
**dadurch gekennzeichnet, dass** eine weitere Regeleinrichtung vorgesehen ist, welche derart ausgelegt ist, dass zusätzlich die Überbrückung einzelner Warmetauscherstufen (1', 2', 3') durch den wärmeaufnehmenden Abluftstrom (Ro) in Abhängigkeit von der Temperatur des wärmeaufnehmenden Abluftstroms (Ro) in der rekuperativen Wärmetauschereinheit (W, W) regelbar ist.

22. Vorrichtung nach einem der Ansprüche 12 bis 21,
**dadurch gekennzeichnet, dass** in Strömungsrichtung des wärmeabgebenden, zumindest teilweise gereinigten Abluftstroms (Ro) hinter der rekuperativen Wärmetauschereinheit (W, W) eine weitere Wärmetauschereinheit (12) zur Erzeugung von Heißluft und/oder zur Erhitzung eines Wärmetragermediums angeordnet ist.

23. Anlage zur Beschichtung und/oder Trocknung von bahnförmigem Material mit einer Vorrichtung nach einem der Ansprüche 12 bis 22.

## Claims

1. A method for thermally cleaning an exhaust air stream loaded with oxidizable substances (Ro),
- wherein the exhaust air stream loaded with oxidizable substances (raw gas stream) (Ro) is passed as a heat-absorbing material flow through a recuperative heat exchanger (W, W'), wherein the oxidizable substances are at least partly oxidized in an exothermic reaction, and wherein the exhaust air stream (Ro) is heated further,
- wherein the heated exhaust air stream (clean gas stream) (Re) that has been at least partly cleaned by oxidation in this manner is passed through a recuperative heat exchanger (W, W') again as a heat-emitting material flow, and thereby provides activation energy for the exothermic reaction,
- if the loaded, heat-absorbing exhaust air stream (raw gas stream) (Ro) heats up too quickly, the volume flow of the heated, heat-emitting, at least partially cleaned exhaust air stream (clean gas stream) (Re) is reduced by the recuperative heat exchanger (W, W').

2. The method according to claim 1,
**characterized in that**
the reduction of the volume flow of the heat-emitting exhaust air stream (clean gas stream) (Re) is effected by the heat exchanger (W, W') by means of at least one throttle valve (14, 14').

3. The method according to claim 2,
**characterized in that**
the throttle valve (14, 14') is arranged at the outlet side of the recuperative heat exchanger (W, W') relative to the heat-emitting exhaust air stream (clean gas stream) (Re).

4. The method according to any of claims 1 to 3,
**characterized in that**
when the volume flow of the heat-emitting exhaust air stream (clean gas stream) (Re) is reduced by the recuperative heat exchanger (W, W'), the excess volume flow is diverted around the recuperative heat exchanger (W, W') through a first bypass line (8, 8').

5. The method according to claim 4,
**characterized in that**
at least one heat exchanger stage (1', 2', 3') is bypassed via at least one second bypass line (100', 400').

6. The method according to any of claims 1 to 5,
**characterized in that**
after exiting the recuperative heat exchanger (W, W'), the partially cleaned, heated exhaust air stream (Re) is passed to a burner chamber (5, 5') where it is heated further by a burner (5a, 5a').

7. The method according to claim 6,
**characterized in that**
the burner output is adjusted according to the temperature of the loaded exhaust air streams (Ro) in the heat exchanger (W, W').

8. The method according to any of claims 1 to 7,
**characterized in that**
after exiting the recuperative heat exchanger (W, W'), the partially cleaned, heated exhaust air stream (Re) is passed through a catalytic unit (6, 6') for further oxidation of the oxidizable substances.

9. The method according to claim 8,
**characterized in that**
the catalytic unit (6, 6') comprises a ceramic bulk material and/or ceramic honeycomb bricks.

10. The method according to claims 6 or 7, and either of claims 8 or 9,
**characterized in that**
after exiting the recuperative heat exchanger (W, W'), the at least partially cleaned, heated exhaust air stream (Ro) is first passed into the burner chamber (5, 5') and is then passed through the catalytic unit (6, 6').

11. The method according to claim 4,
**characterized in that**
after exiting the recuperative heat exchanger (W, W'), or after passing through the first bypass line (8, 8'), the heat-emitting exhaust air stream (clean gas stream) (Re) is passed through a further heat exchanger (12) for generating hot air and/or heating a thermal carrier medium.

12. A device for thermally cleaning an exhaust air stream loaded with oxidizable substances (Ro) by thermal afterburning, particularly for carrying out a method according to any of claims 1 to 11,
- with a multistage recuperative heat exchanger (W, W'), through which the exhaust air stream loaded with oxidizable substances (raw gas stream) (Ro) can be passed as a heat-absorbing material flow, wherein the oxidizable substances are at least partly oxidized in an exothermic reaction, and wherein the temperature level of the exhaust air stream (Ro) rises,
- wherein the heated exhaust air stream (clean gas stream) (Re) that has been at least partly cleaned by oxidation in this manner can be passed through the recuperative heat exchanger (W, W') as a heat-emitting material flow, so that activation energy is provided in this way for the exothermic reaction,
- wherein an adjustment device is provided that is designed so that the volume flow of the at least partially cleaned, heated exhaust air stream (clean gas stream) (Re) can be adjusted by the recuperative heat exchanger (W, W') depending on the temperature of the heat-absorbing, loaded exhaust air stream (raw gas stream) (Ro) in such manner that if the loaded, heat-absorbing exhaust air stream (raw gas stream) (Ro) heats up too quickly, the volume flow of the heated, heat-emitting, at least partially cleaned exhaust air stream (clean gas stream) (Re) is reduced by the recuperative heat exchanger (W, W').

13. The device according to claim 12,
**characterized in that**
a first bypass line (8, 8') is provided to enable at least some of the at least partially oxidatively cleaned, heated exhaust air stream (clean gas stream) (Re) to be diverted around the recuperative heat exchanger.

14. The device according to claim 13,
**characterized in that**
at least one second bypass line (100', 400'), which is adjustable to vary the rate of flow in the line, is provided so that at least one heat exchanger stage (1', 2', 3') can be bypassed.

15. The device according to any of claims 12 to 14,
**characterized in that**
a burner chamber (5, 5') with a burner (5a, 5a') is arranged after the recuperative heat exchanger (W, W') in the direction of flow of the heat-absorbing exhaust air stream (raw gas stream) (Ro).

16. The device according to claim 15,
**characterized in that**
the burner is a gas-operated burner (5a, 5a').

17. The device according to any of claims 12 to 16,
**characterized in that**
a catalyst unit (6, 6') is arranged after the at least one heat exchanger (W, W') in the direction of flow of the heat-absorbing, loaded exhaust air stream (Re) for further oxidation.

18. The device according to claim 17,
**characterized in that**
the catalyst unit (6, 6') comprises a ceramic bulk material and/or ceramic honeycomb bricks.

19. The device according to either of claims 15 or 16, and claim 17 or 18,
**characterized in that**
the catalyst unit (6, 6') is arranged after the burner chamber (5, 5') in the direction of flow of the heat-absorbing exhaust air stream (Ro).

20. The device according to any one of claims 12 to 19,
**characterized in that**
the adjustment device is further designed such that the burner output can be adjusted according to the temperature of the heat-absorbing, loaded exhaust air stream (raw gas stream) (Ro).

21. The device according to claim 20,
**characterized in that**
a further adjustment device is provided, which is designed is such manner that the bypassing of individual heat exchanger stages (1', 2', 3') by the heat-absorbing exhaust air stream (Ro) can be adjusted depending on the temperature of the heat-absorbing exhaust air stream (Ro) in the recuperative heat exchanger (W, W').

22. The device according to any one of claims 12 to 21,
**characterized in that**
a further heat exchanger (12) is arranged after the recuperative heat exchanger (W, W') in the direction of flow of the heat-emitting, at least partially cleaned exhaust air stream (Ro) in order to generate hot air and/or to heat a thermal carrier medium.

23. A system for coating and/or drying weblike material, having a device according to any one of claims 12 to 22.

## Revendications

1. Procédé d'épuration thermique d'un courant d'air évacué (Ro) chargé de substances oxydables au moyen d'une postcombustion thermique
- pour lequel le courant d'air évacué chargé de substances oxydables (courant de gaz brut) (Ro) est envoyé en tant que courant de substances absorbant la chaleur à travers une unité échangeuse de chaleur de récupération multiétagée (W, W'), pour lequel les substances oxydables sont oxydées au moins partiellement dans une réaction exothermique, pour lequel le courant d'air évacué (Ro) est chauffé complémentairement,
- pour lequel le courant d'air évacué chauffé épuré oxydant au moins partiellement (courant de gaz épuré) (Re) de cette façon est envoyé de nouveau en tant que courant de substances cédant de la chaleur à travers au moins une unité échangeuse de chaleur de récupération (W, W') et fournit à cet effet l'énergie d'activation pour la réaction exothermique,
- le débit volumétrique du courant d'air évacué chauffé épuré au moins partiellement cédant de la chaleur (courant de gaz épuré) (Re) est réduit par l'unité échangeuse de chaleur de récupération (W, W') lors d'un réchauffement trop rapide du courant d'air évacué chargé absorbant de la chaleur (courant de gaz brut) (Ro).

2. Procédé selon la revendication 1,
**caractérisé en ce que**
la réduction du débit volumétrique du courant d'air évacué cédant de la chaleur (courant de gaz épuré)(Re) à travers l'unité échangeuse de chaleur de récupération (W, W') a lieu à travers au moins un clapet d'étranglement (14, 14').

3. Procédé selon la revendication 2,
**caractérisé en ce que**
le clapet d'étranglement (14, 14') par rapport au courant d'air évacué cédant de la chaleur (courant de gaz épuré) (Re) est disposé sur le côté de sortie de l'unité échangeuse de chaleur de récupération (W, W').

4. Procédé selon la revendication 1 à 3,
**caractérisé en ce que**
lors de la réduction du débit volumétrique du courant d'air évacué cédant de la chaleur (courant de gaz épuré) (Re) à travers l'unité échangeuse de chaleur de récupération (W, W'), le débit volumérique en excédent est envoyé à travers un premier conduit de dérivation (8, 8') sur l'unité échangeuse de chaleur de récupétration (W, W').

5. Procédé selon la revendication 4,
**caractérisé en ce qu'**
au moins un étage de l'échangeur de chaleur (1', 2', 3') est dérivé par au moins un deuxième conduit de dérivation (100', 400').

6. Procédé selon l'une quelconque des revendications 1 à 5,
**caractérisé en ce que**
le courant d'air évacué chauffé, partiellement épuré (Re) est envoyé après sortie de l'unité échangeuse de chaleur de récupération (W, W') dans une chambre de combustion (5, 5') et y est chauffée complémentairement par un brûleur (5a, 5a').

7. Procédé selon la revendication 6,
**caractérisé en ce que**
la puissance du brûleur est régulée en fonction de la température du courant d'air évacué chargé (Ro) dans l'unité échangeuse de chaleur (W, W').

8. Procédé selon l'une quelconque des revendications 1 à 7,
**caractérisé en ce que**
le courant d'air évacué chauffé, partiellement épuré (Ro) est envoyé après sortie de l'unité échangeuse de chaleur de récupération (W, W') à travers une unité catalytique (6, 6') pour une autre oxydation des substances oxydables.

9. Procédé selon la revendication 8,
**caractérisé en ce que**
l'unité catalytique (6, 6') comprend un matériau en vrac céramique et/ou des briques perforées en nid d'abeilles en céramique.

10. Procédé selon la revendication 6 ou 7 et l'une quelconque des revendications 8 ou 9,
**caractérisé en ce que**
le courant d'air évacué chauffé, épuré au moins partiellement (Ro) est envoyé après avoir quitté l'unité échangeuse de chaleur de récupération (W, W') d'abord dans la chambre de combustion (5, 5') et ensuite envoyé à travers l'unité catalytique (6, 6').

11. Procédé selon la revendication 4,
**caractérisé en ce que**
le courant d'air évacué cédant de la chaleur (courant de gaz épuré) (Re) après avoir quitté l'unité échangeuse de chaleur de récupération (W, W') ou après être passé à travers le conduit de dérivation (8, 8') est envoyé à travers une autre unité échangeuse de chaleur (12) pour produire de l'air chaud et/ou pour réchauffer un milieu caloporteur.

12. Dispositif d'épuration thermique d'un courant d'air évacué chargé de substances oxydables (Ro) au moyen d'une postcombustion thermique, en particulier pour exécuter un procédé selon l'une quelconque des revendications 1 à 11,
- avec une unité échangeuse de chaleur de récupération multiétagée (W, W') à travers laquelle le courant d'air évacué chargé de substances oxydables (courant de gaz brut) (Ro) peut être passé en tant que courant de substances absorbant de la chaleur, pour lequel les substances oxydables sont au moins partiellement oxydées dans une réaction exothermique et pour lequel le niveau de température du courant d'air évacué (Ro) augmente,
- pour lequel le courant d'air évacué chauffé, épuré oxydant au moins partiellement de cette manière (courant de gaz épuré) (Re) peut être passé en tant que courant de substances cédant de la chaleur à travers l'unité échangeuse de chaleur de récupération (W, W') de sorte qu'à cet effet l'énergie d'activation est fournie pour la réaction exothermique,
- pour lequel un dispositif de régulation est prévu, lequel est conçu de telle manière que le débit volumétrique du courant d'air évacué chauffé, épuré au moins partiellement (courant de gaz épuré) (Re) à travers l'unité échangeuse de chaleur de récupération (W, W') peut être réglé en fonction de la température du courant d'air évacué chargé absorbant de la chaleur (courant de gaz brut) (Ro) de telle sorte que lors d'un chauffage trop rapide du courant d'air évacué chargé absorbant de la chaleur (courant de gaz brut) (Ro), le débit volumétrique du courant d'air évacué, chauffé épuré au moins partiellement cédant de la chaleur (courant de gaz épuré) (Re) est réduit par l'unité échangeuse de chaleur de récupération (W, W').

13. Dispositif selon la revendication 12,
**caractérisé en ce qu'**
un premier conduit de dérivation (8, 8') est prévu à travers le courant d'air évacué chauffé, épuré oxydant au moins partiellement (courant de gaz épuré) (Re) pour dériver au moins en partie l'unité échangeuse de chaleur de récupération.

14. Dispositif selon la revendication 13,
**caractérisé en ce qu'**
au moins un deuxième conduit de dérivation (100', 400') est prévu avec un débit de passage réglable de manière variable pour relier au moins un étage d'échangeur de chaleur (1', 2', 3').

15. Dispositif selon l'une quelconque des revendications 12 à 14,
**caractérisé en ce que**
dans le sens d'écoulement du courant d'air évacué absorbant la chaleur (courant de gaz brut) (Ro) une chambre de combustion (5, 5') avec un brûleur (5a, 5a') est disposée derrière l'unité échangeuse de chaleur de récupération (W, W').

16. Dispositif selon la revendication 15,
**caractérisé en ce que** le brûleur est un brûleur fonctionnant au gaz (5a, 5a').

17. Dispositif selon l'une quelconque des revendications 12 à 16,
**caractérisé en ce que**
dans le sens d'écoulement du courant d'air évacué chargé absorbant de la chaleur (Re) une unité catalytique (6, 6') est disposée derrière au moins une unité échangeuse de chaleur (W, W') pour une autre oxydation.

18. Dispositif selon la revendication 17,
**caractérisé en ce que**
l'unité catalytique (6, 6') comprend une matière en vrac céramique et/ou des briques perforées en nid d'abeilles en céramique.

19. Dispositif selon la revendication 15 ou 16 et la revendication 17 ou 18,
**caractérisé en ce que**
l'unité catalytique (6, 6') est disposée dans le sens d'écoulement du courant d'air évacué chargé absorbant la chaleur (Ro) derrière la chambre de combustion (5, 5').

20. Dispositif selon l'une quelconque des revendications 12 à 19,
**caractérisé en ce que**
le dispositif de régulation est en plus conçu de telle manière que la puissance du brûleur peut être régulée en fonction de la température du courant d'air évacué chargé absorbant la chaleur (courant de gaz brut) (Ro).

21. Dispositif selon la revendication 20,
**caractérisé en ce qu'**
un autre dispositif de régulation est prévu, lequel est conçu de telle manière qu'en plus le pontage des étages d'échangeur de chaleur individuels (1', 2', 3') à travers le courant d'air évacué absorbant la chaleur (Ro) peut être réglé en fonction de la température du courant d'air évacué absorbant la chaleur (Ro) dans l'unité échangeuse de chaleur de récupération (W, W).

22. Dispositif selon l'une quelconque des revendications 12 à 21,
**caractérisé en ce que**
dans le sens d'écoulement du courant d'air évacué, épuré au moins partiellement cédant de la chaleur (Ro), une autre unité échangeuse de chaleur (12) est disposée derrière l'unité échangeuse de chaleur de récupération (W, W') pour produire de l'air chaud et/ou pour réchauffer un milieu caloporteur.

23. Installation pour le revêtement et/ou le séchage d'un matériau en forme de bande avec un dispositif selon l'une quelconque des revendications 12 à 22.
